(19) Europäisches Patentamt European Patent Office Office européen des brevets

(11) **EP 4 036 168 A1**

(12) **EUROPEAN PATENT APPLICATION**
published in accordance with Art. 153(4) EPC

(43) Date of publication:
**03.08.2022 Bulletin 2022/31**

(21) Application number: 20870233.2

(22) Date of filing: **21.07.2020**

(51) International Patent Classification (IPC):
*C08L 67/02* (2006.01)      *C08G 63/672* (2006.01)
*C08G 63/60* (2006.01)      *C08J 5/18* (2006.01)
*B32B 27/36* (2006.01)      *B29C 55/04* (2006.01)
*B29C 55/12* (2006.01)

(52) Cooperative Patent Classification (CPC):
**B29C 55/04; B29C 55/12; B32B 27/36;
C08G 63/60; C08G 63/672; C08J 5/18; C08L 67/02**

(86) International application number:
**PCT/KR2020/009616**

(87) International publication number:
**WO 2021/060686 (01.04.2021 Gazette 2021/13)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **27.09.2019   KR 20190119676**

(71) Applicant: SK Chemicals Co., Ltd.
**Seongnam-si, Gyeonggi-do 13494 (KR)**

(72) Inventors:
• LEE, Boo-Youn
  **Bucheon-si, Gyeonggi-do 14749 (KR)**
• KIM, Eui-Su
  **Seongnam-si, Gyeonggi-do 13494 (KR)**
• KIM, Jong Ryang
  **Seongnam-si, Gyeonggi-do 13528 (KR)**

(74) Representative: **Berggren Oy**
**P.O. Box 16
Eteläinen Rautatiekatu 10A
00101 Helsinki (FI)**

(54) **POLYESTER RESIN BLEND, POLYESTER FILM, AND PREPARATION METHOD THEREOF**

(57)     The present disclosure relates to a polyester resin blend, a polyester film and a preparation method of the same. The polyester resin blend is capable of providing a heat shrinkable label that is transparent and has excellent shrinkage even if it contains recycled polyethylene terephthalate as well as virgin polyethylene terephthalate. In addition, the heat shrinkable label can be reused while attached to a PET container, etc., and is expected to be useful for providing continuously usable plastics that have been recently attracting attention.

EP 4 036 168 A1

**Description**

[TECHNICAL FIELD]

The present disclosure relates to a polyester resin blend, a polyester film and a preparation method of the same.

[BACKGROUND OF ART]

A heat shrinkable film has a property of being shrunk when heated, and is used for a shrinkage packaging, a shrinkable label, and the like. Among them, polyvinyl chloride (PVC), polystyrene, and polyester films have been used as labels or cap seals of various containers, or used as a direct packaging material.

However, the film made of polyvinyl chloride is subject to environmental regulation due to environmental problems such as hydrogen chloride gas and dioxincausing substances upon incineration. In addition, the polystyrene film has good working stability when undergoing the shrinkage process and the appearance of the product is good, but has poor chemical resistance, thereby requiring an ink having a specific composition for printing. Furthermore, the polystyrene film has insufficient storage stability at room temperature, so that it may become spontaneously shrunk, undesirably deforming the dimensions thereof. In addition, when the polyvinyl chloride film or the polystyrene film is used as a shrinkable label of a polyethylene terephthalate container, or the like, a troublesome process of separating the label from the container has to be undergone at the time of reusing the container.

On the other hand, when the polyester film is used as a label of a polyethylene terephthalate container, it can be introduced into a process for recycling the polyethylene terephthalate container without separation of the label, thereby improving convenience of the process. In particular, as the use of the polyethylene terephthalate container has recently increased, an interest in polyester films that can be introduced into a recycle process without separating labels has been gradually increased. However, the conventional heat shrinkable polyester film does not exhibit sufficient heat shrinkage, and thus it is necessary to improve shrinkage properties of the polyester film. In particular, an amorphous polyester film has a problem that recycling of the container is impossible due to a fusion phenomenon that sticks to the container in the process of drying the container after washing in the recycle process of the polyethylene terephthalate container.

Accordingly, there is a demand for research on recyclable polyester films such as polyethylene terephthalate containers having superior shrinkage properties than conventional polyester resins.

[DETAILED DESCRIPTION OF THE INVENTION]

[Technical Problem]

In the present disclosure, there is provided a polyester resin blend capable of providing a heat shrinkable film having excellent shrinkage properties.

In the present disclosure, there are also provided a polyester film prepared from the polyester resin blend and a preparation method of the same.

[Technical Solution]

According to an embodiment of the present disclosure, there is provided a polyester resin blend including polyethylene terephthalate; and a polyester resin having a structure in which an acid moiety derived from a dicarboxylic acid or a derivative thereof and a diol moiety derived from a diol containing ethylene glycol and a comonomer are repeated by polymerizing a dicarboxylic acid or a derivative thereof and a diol containing ethylene glycol and a comonomer; wherein the comonomer contains cyclohexanedimethanol, 4-(hydroxymethyl)cyclohexylmethyl 4-(hydroxymethyl)cyclohexanecarboxylate and 4-(4-(hydroxymethyl)cyclohexylmethoxymethyl)cyclohexylmethanol, and the polyester resin includes 0.2 to 30 mol% of a diol moiety derived from 4-(hydroxymethyl)cyclohexylmethyl 4-(hydroxymethyl)cyclohexanecarboxylate and 4-(4-(hydroxymethyl)cyclohexylmethoxymethyl)cyclohexylmethanol with respect to the total diol moiety.

[ADVANTAGEOUS EFFECTS]

The polyester resin blend according to an embodiment of the present disclosure is capable of providing a heat shrinkable label that is transparent and has excellent shrinkage even if it contains recycled polyethylene terephthalate as well as virgin polyethylene terephthalate. In addition, the heat shrinkable label can be reused while attached to a PET container, etc., and is expected to be useful for providing continuously usable plastics that have been recently attracting attention.

[DETAILED DESCRIPTION OF THE EMBODIMENTS]

Hereinafter, the polyester resin blend and the polyester film prepared therefrom according to specific embodiments of the present disclosure will be described.

The terminology used herein is for the purpose of describing particular embodiments only and is not intended to be limiting of the invention. The singular forms are intended to include the plural forms as well, unless the context clearly indicates otherwise. The terms "include", "comprise", and the like of the present disclosure are used to specify certain features, regions, integers, steps, operations, elements, and/or components, and these do not exclude the existence or the addition of other certain features, regions, integers, steps, operations, elements, and/or components.

According to an embodiment of the present disclosure, there is provided a polyester resin blend including polyethylene terephthalate; and a polyester resin having a structure in which an acid moiety derived from a dicarboxylic acid or a derivative thereof and a diol moiety derived from a diol containing ethylene glycol and a comonomer are repeated by polymerizing a dicarboxylic acid or a derivative thereof and a diol containing ethylene glycol and a comonomer; wherein the comonomer contains cyclohexanedimethanol, 4-(hydroxymethyl)cyclohexylmethyl 4-(hydroxymethyl)cyclohexanecarboxylate and 4-(4-(hydroxymethyl)cyclohexylmethoxymethyl)cyclohexylmethanol, and the polyester resin includes 0.2 to 30 mol% of a diol moiety derived from 4-(hydroxymethyl)cyclohexylmethyl 4-(hydroxymethyl)cyclohexanecarboxylate and 4-(4-(hydroxymethyl)cyclohexylmethoxymethyl)cyclohexylmethanol with respect to the total diol moiety.

The polyester resin is obtained by polymerizing a dicarboxylic acid or a derivative thereof and a diol, and has a structure in which an acid moiety derived from a dicarboxylic acid or a derivative thereof and a diol moiety derived from a diol are repeated. In the present disclosure, the acid moiety and the diol moiety refer to a residue remaining after the dicarboxylic acid or a derivative thereof and the diol are polymerized to remove hydrogen, hydroxyl or alkoxy groups from them.

As used herein, the term 'dicarboxylic acid or a derivative thereof' means at least one compound selected from a dicarboxylic acid and derivatives of the dicarboxylic acid. In addition, the term 'derivative of the dicarboxylic acid' means an alkyl ester of dicarboxylic acid (C1 to C4 lower alkyl ester such as monomethyl ester, monoethyl ester, dimethyl ester, diethyl ester, dibutyl ester, or the like) or a dicarboxylic acid anhydride. Accordingly, for example, the terephthalic acid or the derivative thereof commonly includes a compound that reacts with a diol to form a terephthaloyl moiety, such as terephthalic acid; monoalkyl or dialkyl terephthalate; and terephthalic acid anhydride.

The polyethylene terephthalate is widely used commercially due to its low price and excellent physical/chemical properties, but it has insufficient heat shrinkage to provide a heat shrinkable label. In addition, it has high crystallinity, thereby requiring a high temperature during processing, and has a limitation in providing a transparent product due to its high crystallization rate.

The present inventors have researched to solve this problem, and found that blending polyethylene terephthalate with the polyester resin including a diol moiety derived from a comonomer containing cyclohexanedimethanol, 4-(hydroxymethyl)cyclohexylmethyl 4-(hydroxymethyl)cyclohexanecarboxylate and 4-(4-(hydroxymethyl)cyclohexylmethoxymethyl)cyclohexylmethanol, wherein the diol moiety derived from 4-(hydroxymethyl)cyclohexylmethyl 4-(hydroxymethyl)cyclohexanecarboxylate and 4-(4-(hydroxymethyl)cyclohexylmethoxymethyl)cyclohexylmethanol is included in the above-described range, can provide a polyester film having excellent transparency and shrinkage, thereby completing the present invention.

The polyester film is heat shrinkable at a low temperature similar to the heat shrink temperature of the polyvinyl chloride film and exhibits excellent shrinkage, so that can be used as a heat shrinkable label for PET containers without deformation or cloudiness of the polyethylene terephthalate container (PET container).

Conventional heat shrinkable labels are removed before feeding the PET container to a recycle stream, because they are fused with the PET container in the process of drying the used PET container after washing. However, a heat shrinkable label prepared from the polyester resin blend according to the above embodiment can be crystallized even at a high drying temperature, so that it can be supplied to the recycle stream of the PET container while being attached to the PET container.

In this disclosure, 4-(hydroxymethyl)cyclohexylmethyl 4-(hydroxymethyl)cyclohexanecarboxylate is simply referred to as diol A, and 4-(4-(hydroxymethyl)cyclohexylmethoxymethyl)cyclohexylmethanol is simply referred to as diol B.

Hereinafter, the polyester resin blend will be described in detail.

The polyester resin according to the embodiment may be blended with various general-purpose polyethylene terephthalates to control its shrinkage properties, crystallinity and crystallization rate to appropriate levels, thereby providing a polyester film or a thick container having high transparency and excellent shrinkage.

Accordingly, the type of the polyethylene terephthalate is not particularly limited. For example, the polyethylene terephthalate is prepared by polymerizing a dicarboxylic acid or a derivative thereof and a diol, and the dicarboxylic acid or a derivative thereof may be mainly terephthalic acid or a derivative thereof and the diol may be mainly ethylene glycol.

The polyethylene terephthalate may include an acid moiety derived from a comonomer other than terephthalic acid or a derivative thereof. Specifically, the comonomer may be at least one selected from the group consisting of a C8-C14 aromatic dicarboxylic acid or a derivative thereof, and a C4-C12 aliphatic dicarboxylic acid or a derivative thereof. Examples of the C8-C14 aromatic dicarboxylic acid or the derivative thereof may include aromatic dicarboxylic acids or derivatives thereof that are generally used in manufacture of the polyester resin, for example, naphthalene dicarboxylic acid such as isophthalic acid, dimethyl isophthalate, phthalic acid, dimethyl phthalate, phthalic acid anhydride, 2,6-naphthalene dicarboxylic acid, etc., dialkylnaphthalene dicarboxylate such as dimethyl 2,6-naphthalene dicarboxylate, etc., diphenyl dicarboxylic acid, etc. Examples of the C4-C12 aliphatic dicarboxylic acid or the derivative thereof may include linear, branched or cyclic aliphatic dicarboxylic acids or derivatives thereof that are generally used in manufacture of the polyester resin, for example, cyclohexane dicarboxylic acid such as 1,4-cyclohexane dicarboxylic acid, 1,3-cyclohexane dicarboxylic acid, etc., cyclohexane dicarboxylate such as dimethyl 1,4-cyclohexane dicarboxylate, dimethyl 1,3-cyclohexane dicarboxylate, etc., sebacic acid, succinic acid, isodecylsuccinic acid, maleic acid, maleic anhydride, fumaric acid, adipic acid, glutaric acid, azelaic acid, etc. The comonomer may be used in an amount of 0 to 50 mol%, 0 mol% to 30 mol%, 0 to 20 mol% or 0 to 10 mol% with respect to the total dicarboxylic acid or the derivative thereof.

The polyethylene terephthalate may include a diol moiety derived from a comonomer other than ethylene glycol. Specifically, the comonomer may be a C8-C40, or C8-C33 aromatic diol, a C2-C20, or C2-C12 aliphatic diol, or a mixture thereof. Examples of the aromatic diol may include ethylene oxide and/or propylene oxideadded bisphenol A derivatives such as polyoxyethylene-(n)-2,2-bis(4-hydroxyphenyl)propane, polyoxypropylene-(n)-2,2-bis(4-hydroxyphenyl)propane, or polyoxypropylene-(n)-polyoxyethylene-(n)-2,2-bis(4-hydroxyphenyl)propane (wherein n is the number of polyoxyethylene or polyoxypropylene units, and may be 0 to 10). Examples of the aliphatic diol may include linear, branched or cyclic aliphatic diols such as diethylene glycol, triethylene glycol, propanediol (1,2-propanediol, 1,3-propanediol, etc.), 2-methyl-1,3-propanediol, 2-methylene-1,3-propanediol, 2-ethyl-1,3-propanediol, 2-isopropyl-1,3-propanediol, 1,4-butanediol, 2,3-butanediol, pentanediol (1,5-pentanediol, 2,4-pentanediol, etc.), 3-methyl-1,5-pentanediol, 3-methyl-2,4-pentanediol, hexanediol (1,6-hexanediol, etc.), neopentyl glycol (2,2-dimethyl-1,3-propanediol), 1,2-cyclohexanediol, 1,4-cyclohexanediol, 1,2-cyclohexanedimethanol, 1,3-cyclohexanedimethanol, 1,4-cyclohexanedimethanol, tetramethyl cyclobutanediol, etc. The comonomer may be used in an amount of 0 to 50 mol%, 0 mol% to 30 mol%, 0 to 20 mol% or 0 to 10 mol% with respect to the total diol.

The polyethylene terephthalate is not particularly limited, but may have an intrinsic viscosity of 0.50 to 1.2 dl/g, or 0.50 to 1.0 dl/g to exhibit excellent miscibility with the polyester resin and have better shrinkage properties, wherein the intrinsic viscosity is measured at 35 °C after dissolving the polymer at a concentration of 1.2 g/dl in orthochlorophenol at 150 °C for 15 minutes.

The polyester resin according to the above embodiment may not only supplement physical properties of virgin polyethylene terephthalate, but also supplement reduced physical properties of recycled polyethylene terephthalate to a very good level.

The recycled polyethylene terephthalate can be understood to include polyethylene terephthalate collected after use or all obtained therefrom. Specifically, the recycled polyethylene terephthalate may be obtained by separating the collected waste plastics according to a certain standard, pulverizing and washing them and then repelletizing them by melt extrusion, or may be obtained by depolymerizing the collected waste plastics to a monomer level and repolymerizing them. The recycled polyethylene terephthalate may be used after re-pelletization and crystallization, or after further polycondensation in a solid state after crystallization depending on a processing method.

The recycled polyethylene terephthalate repolymerized by depolymerizing waste plastics to a monomer level may exhibit good properties that are not easily distinguishable from virgin polyethylene terephthalate. However, recycled polyethylene terephthalate obtained by re-pelletization of waste plastics is less transparent than virgin polyethylene terephthalate and has poor physical properties, making it difficult to produce a film capable of shrinking to an appropriate level, even if the recycled polyethylene terephthalate is used alone or mixed with virgin polyethylene terephthalate. However, the polyester resin according to an embodiment exhibits excellent miscibility with the recycled polyethylene terephthalate, and is blended with the recycled polyethylene terephthalate to provide a polyester film exhibiting excellent shrinkage properties. In particular, the polyester resin according to an embodiment can provide a polyester film having excellent shrinkage without other additives, because it is highly miscible with recycled polyethylene terephthalate.

Accordingly, virgin polyethylene terephthalate, recycled polyethylene terephthalate, or a mixture thereof may be used as the polyethylene terephthalate.

In particular, the polyester resin blend according to an embodiment may exhibit high transparency and excellent processability by including a resin having an intrinsic viscosity of 0.50 to 1.2 dl/g, or 0.50 to 1.0 dl/g among the recycled polyethylene terephthalate, wherein the intrinsic viscosity is measured at 35 °C after dissolving the polymer at a concentration of 1.2 g/dl in orthochlorophenol at 150 °C for 15 minutes.

In addition, the polyester resin according to the above embodiment is useful for recycling a resin containing 95 mol% or more of an acid moiety derived from terephthalic acid and 95 mol% or more of a diol moiety derived from ethylene glycol among the recycled polyethylene terephthalate. Since the resin may be a homopolymer made of terephthalic acid and ethylene glycol, the upper limits of the acid moiety derived from terephthalic acid and the diol moiety derived from ethylene glycol are 100 mol%. When the acid moiety derived from terephthalic acid or the diol moiety derived from ethylene glycol is less than 100 mol%, the acid moiety or the diol moiety derived from the comonomer described above may be included within 5 mol%. Specifically, an acid moiety derived from isophthalic acid and/or a diol moiety derived from cyclohexanedimethanol may be included within 5 mol%, respectively.

The polyester resin may be blended with recycled polyethylene terephthalate having a crystallization temperature of 130 °C to 160 °C to effectively control a crystallization rate of the recycled polyethylene terephthalate.

The polyester resin may be blended with recycled polyethylene terephthalate having a melting temperature of 250 °C or higher to provide a polyester resin blend with excellent processability.

The polyester resin according to the embodiment has a structure in which an acid moiety derived from a dicarboxylic acid or a derivative thereof, a diol moiety derived from ethylene glycol, a diol moiety derived from cyclohexanedimethanol, a diol moiety derived from diol A and a diol moiety derived from diol B are repeated by polymerizing a dicarboxylic acid or a derivative thereof and a diol containing ethylene glycol and a comonomer (including cyclohexanedimethanol, diol A and diol B).

The polyester resin may provide a polyester resin blend having excellent shrinkage properties, as the diol moiety derived from diol A and the diol moiety derived from diol B are included in an amount of 0.2 to 30 mol% with respect to the total diol moiety.

Specifically, a length of the molecular chain above a certain length related to residual stress in the polyester resin becomes longer due to the diol moiety derived from diol A and diol B. Therefore, the residual stress increases during stretching of the polyester film prepared from the polyester resin blend, and when heat is supplied to the polyester film, shrinkage force by the residual stress relief increases, and thus high shrinkage can be exhibited.

When the diol moiety derived from diol A and diol B is less than 0.2 mol%, it is difficult to provide a polyester film having high shrinkage, because the shrinkage properties of polyethylene terephthalate cannot be improved. When the diol moiety derived from diol A and diol B exceeds 30 mol%, it is difficult to achieve a desired viscosity due to a decrease in reactivity in the polymerization process of the polyester resin, and whitening occurs due to over-stretching in the stretching process of the polyester film prepared from the polyester resin blend, resulting in a deterioration in value as a heat shrinkable film.

The polyester resin may include about 0.2 to 30 mol%, about 0.5 to 30 mol%, about 1 to 30 mol%, about 2 to 30 mol%, about 3 to 30 mol%, about 4 to 30 mol%, about 5 to 30 mol%, about 6 to 30 mol%, about 7 to 30 mol%, about 8 to 30 mol%, about 9 to 30 mol%, or about 10 to 30 mol% of the diol moiety derived from diol A and the diol moiety derived from diol B with respect to the total diol moiety, in order to exhibit excellent shrinkage even when blended with crystalline polyethylene terephthalate.

The polyester resin may include 0.1 to 15 mol% of the diol moiety derived from diol A and/or 0.1 to 15 mol% of the diol moiety derived from diol B with respect to the total diol moiety to maximize the above-described effect.

Meanwhile, the polyester resin may include 1 to 35 mol%, 1 to 32 mol% or 1 to 30 mol% of a diol moiety derived from cyclohexanedimethanol with respect to the total diol moiety. Within this range, it is possible to provide a polyester resin blend having excellent shrinkage properties and transparency.

The cyclohexanedimethanol may be 1,4-cyclohexanedimethanol, 1,3-cyclohexanedimethanol, 1,2-cyclohexanedimethanol or a mixture thereof, or it may be 1,4-cyclohexanedimethanol.

The polyester resin may include 2 to 15 mol%, 3 to 15 mol%, 4 to 15 mol%, 5 to 15 mol%, or 10 to 13 mol% of a diol moiety derived from diethylene glycol with respect to the total diol moiety. The diol moiety derived from diethylene glycol introduced into the polyester resin may be introduced by reacting two ethylene glycols during polymerization of the polyester resin to form diethylene glycol, and reacting the diethylene glycol with a dicarboxylic acid or a derivative thereof. However, the present disclosure is not limited thereto, and the diol moiety derived from diethylene glycol may be formed by adding diethylene glycol as a comonomer other than ethylene glycol at the time of preparing the polyester resin in order to control the content of the diol moiety derived from diethylene glycol within the above-described range. The polyester resin may provide a polyester resin blend having excellent shrinkage properties and transparency, as the diol moiety derived from diethylene glycol is included within the above-described range. Particularly, when diethylene glycol is added as a comonomer other than ethylene glycol in the preparation of the polyester resin to include a large amount of the diol moiety derived from diethylene glycol, elongation of the polyester film is improved and high magnification stretching is possible, so that a very thin polyester film having excellent shrinkage properties may be provided.

The remaining diol moiety except for the diol moiety described above in the polyester resin may be a diol moiety derived from ethylene glycol.

Meanwhile, the comonomer other than ethylene glycol may include a diol generally used in manufacture of the polyester resin in addition to the monomers described above. Specific examples of the diol may include diols listed that can be used in the above-described polyethylene terephthalate.

For example, as the polyester resin is prepared by using 1,2-propanediol, 1,3-propanediol, 2-methyl-1,3-propanediol, 2-methylene-1,3-propanediol, 2-ethyl-1,3-propanediol, 2-isopropyl-1,3-propanediol, 2,2-dimethyl-1,3-propanediol, 1,4-butanediol, 2,3-butanediol, 3-methyl-1,5-pentanediol, 3-methyl-2,4-pentanediol, 1,6-hexanediol, 1,2-cyclohexanediol, 1,4-cyclohexanediol, diethylene glycol, or a mixture thereof as the comonomer other than ethylene glycol, a diol moiety derived from the comonomer may be further included. The comonomer can be suitably used to improve moldability or other physical properties of the polyester resin to be prepared. However, it is advantageous for the comonomer other than ethylene glycol to be a combination of cyclohexanedimethanol, diol A and diol B; or a combination of the same and diethylene glycol, if necessary, to satisfy the above-described physical properties. When the comonomer contains cyclohexanedimethanol, diol A and diol B; and diols other than diethylene glycol, if necessary, the content may be 10 mol% or less, 5 mol% or less, or 2 mol% or less with respect to the total comonomer.

In the polyester resin, a dicarboxylic acid or a derivative thereof may be mainly terephthalic acid or a derivative thereof like polyethylene terephthalate described above, and the polyester resin may include a comonomer other than terephthalic acid or a derivative thereof. The type and content of the comonomer can be adjusted by referring to the type and content of the comonomer that can be used for the above-described polyethylene terephthalate.

The polyester resin may have an intrinsic viscosity of about 0.45 to 1.2 dl/g, about 0.55 to 1.0 dl, 0.60 to 1.0 dl/g, or about 0.60 to 0.9 dl/g by the above-described structure, wherein the intrinsic viscosity is measured at 35 °C after dissolving the polymer at a concentration of 1.2 g/dl in orthochlorophenol at 150 °C for 15 minutes. Within this range, the polyester resin has an appropriate molecular weight, has excellent mechanical properties, and can be blended and molded with polyethylene terephthalate under mild pressure and temperature.

The polyester resin may have a glass transition temperature of 60 °C to 80 °C, 62 °C to 78 °C, or 63 °C to 75 °C by the above-described structure.

In addition, a content of an oligomer introduced therein may be 3.0 area% or less, 2.0 area% or less, 1.5 area% or less, or 1.0 area% or less with respect to the total area of the polyester resin. The oligomer refers to a compound having a molecular weight of 500 to 1000 g/mol. Since the polyester resin may not contain the oligomer, a lower limit thereof may be 0 area%. For example, in the polyester resin, the content of the oligomer introduced into the polyester resin may be 0.1 to 3 area%, 0.1 to 2 area%, 0.1 to 1.5 area%, or 0.1 to 1.2 area% with respect to the total area of the polyester resin. Within this range, it is possible to provide a polyester film capable of preventing an increase in haze due to precipitation of oligomers during stretching at a high temperature, maintaining high transparency even after stretching, and minimizing a defect rate in a printing process, which is a post process.

Meanwhile, the polyester resin may be prepared including the steps of performing an esterification reaction or a transesterification reaction on the above-described dicarboxylic acid or a derivative thereof and the above-described diol; and performing a polycondensation reaction on a product obtained by the esterification or transesterification reaction.

In the esterification reaction or transesterification reaction, a catalyst is not necessarily required, but a catalyst may be selectively used to shorten a reaction time. The catalyst may include methylate of sodium or magnesium; acetates, borates, fatty acids, or carbonates of Zn, Cd, Mn, Co, Ca, Ba and the like; metals such as Mg; and oxides of Pb, Zn, Sb, Ge and the like.

The esterification or transesterification reaction may be carried out in a batch, semi-continuous or continuous manner. Each raw material may be added separately, but it may preferably be added in a slurry form in which the dicarboxylic acid or the derivative thereof is mixed in the diol. The diol may be added in a ratio of about 1.2 to 3.0 mol per 1 mol of a dicarboxylic acid or a derivative thereof.

A polycondensation catalyst, a stabilizer, a coloring agent, a crystallizing agent, an antioxidant, a branching agent and the like may be added in the slurry before the esterification or transesterification reaction or in the product after completion of the reaction. However, the input timing of the above-described additive is not limited thereto, and the above-described additive may be added at any time during the preparation of the polyester resin.

As the polycondensation catalyst, at least one of conventional titanium, germanium, antimony, aluminum, tin-based compounds may be appropriately selected and used. Among them, the titanium-based catalyst can copolymerize a large amount of cyclohexane dimethanol with terephthalic acid or a derivative thereof, can perform an equivalent level of reaction even with a small amount compared to an antimony-based catalyst, and is cheaper than a germanium-based catalyst. Examples of the preferable titanium-based catalyst include tetraethyl titanate, acetyltripropyl titanate, tetrapropyl titanate, tetrabutyl titanate, polybutyl titanate, 2-ethylhexyl titanate, octylene glycol titanate, lactate titanate, triethanolamine titanate, acetylacetonate titanate, ethyl acetoacetic ester titanate, isostearyl titanate, titanium dioxide, titanium dioxide/silicon dioxide coprecipitate, titanium dioxide/zirconium dioxide coprecipitate, and the like. The amount of the polycondensation catalyst used may vary depending on the desired color and the stabilizer and coloring agent used, but the polycondensation catalyst can be used so that the amount of titanium element with respect to a weight of the polyester resin is about 1 to 100 ppm, more preferably about 1 to 50 ppm, since it affects the color of the polymerized polyester resin. When the amount of titanium element is less than about 1 ppm, the desired degree of polymerization cannot be reached, and when it exceeds about 100 ppm, the color of the polyester resin becomes yellow, which may make it difficult to obtain a transparent polyester film.

As the stabilizer, phosphorus-based compounds such as phosphoric acid, trimethyl phosphate, triethyl phosphate and triethylphosphonoacetate may be generally used, and an added amount thereof may be 10 to 200 ppm with respect to a weight of the polyester resin based on a phosphorus element. When the amount of the stabilizer is less than 10 ppm, the polyester resin may not be sufficiently stabilized and a color of the polyester resin may become yellow. When the amount is more than 200 ppm, a polyester resin having a high degree of polymerization may not be obtained. Further, examples of the coloring agent to be added for improving a color of the polyester resin may include conventional agents such as cobalt acetate, cobalt propionate, and the like. An added amount thereof may be 1 to 200 ppm with respect to a weight of the polyester resin based on a cobalt element. If necessary, anthraquionone-based compounds, perinone-based compounds, azo-based compounds, methine-based compounds, and the like may be used as an organic coloring agent, and commercially available products include toners such as Polysynthren Blue RLS (manufactured by Clarient) and Solvaperm Red BB (manufactured by Clarient). An added amount of the organic coloring agent may be 0 to 50 ppm with respect to a weight of the polyester resin. When the coloring agent is used in the amount out of the above-described range, a yellow color of the polyester resin may not be sufficiently covered or physical properties may be reduced.

Examples of the crystallizing agent may include a crystal nucleating agent, an ultraviolet absorber, a polyolefin-based resin, a polyamide resin, and the like. Examples of the antioxidant may include a hindered phenolic antioxidant, a phosphite-based antioxidant, a thioether-based antioxidant, and a mixture thereof. The branching agent may be a branching agent having at least three functional groups, and examples thereof include trimellitic anhydride, trimethylol propane, trimellitic acid and a mixture thereof.

Moreover, the esterification reaction may be carried out at a temperature of about 200 to 300 °C, about 230 to 280 °C, about 230 to 265 °C, or about 245 °C to 255 and under a pressure of 0 to 10.0 kgf/cm$^2$ (0 to 7355.6 mmHg), 0 to 5.0 kgf/cm$^2$ (0 to 3677.8 mmHg), 0.1 to 3.0 kgf/cm$^2$ (73.6 to 2206.7 mmHg), or 1.0 to 3.0 kgf/cm$^2$ (736 to 2206.7 mmHg). And the transesterification reaction may be carried out at a temperature of 150 to 270 °C or 180 to 260 °C, and under a pressure of 0 to 5.0 kgf/cm$^2$ (0 to 3677.8 mmHg) or 0.1 to 3.0 kgf/cm$^2$ (73.6 to 2206.7 mmHg). The pressures outside the parentheses refer to gauge pressures (expressed in kgf/cm$^2$) and the pressures inside parentheses refer to absolute pressures (expressed in mmHg).

When the reaction temperature and pressure are out of the above range, physical properties of the polyester resin may be lowered. The reaction time (average residence time) is usually 1 to 24 hours, or 100 to 300 minutes, and may vary depending on the reaction temperature, pressure, and molar ratio of the diol to the dicarboxylic acid or the derivative thereof used.

The product obtained by the esterification or transesterification reaction may be subjected to a polycondensation reaction to prepare a polyester resin having a high degree of polymerization. Generally, the polycondensation reaction may be carried out at a temperature of 150 to 300 °C, 200 to 290 °C, 260 to 290 °C, 260 to 280 °C, or 265 to 275 °C and under a reduced pressure of 400 to 0.01 mmHg, 100 to 0.05 mmHg, or 10 to 0.1 mmHg. Herein, the pressures refer to absolute pressures. The reduced pressure of 400 to 0.01 mmHg is for removing by-products of the polycondensation reaction such as glycol and unreacted materials such as cyclohexanedimethanol. Therefore, when the pressure is out of the above range, the removal of by-products and unreacted materials may be insufficient. In addition, when the temperature of the polycondensation reaction is out of the above range, physical properties of the polyester resin may be lowered. The polycondensation reaction may be carried out for the required time until the desired intrinsic viscosity is reached, for example, for an average residence time of 1 to 24 hours.

In order to reduce the content of the unreacted materials such as cyclohexanedimethanol remaining in the polyester resin, the unreacted raw materials may be discharged out of the system by intentionally maintaining the vacuum reaction for a long period of time at the end of the esterification reaction or the transesterification reaction or at the beginning of the polycondensation reaction, that is, in a state in which the viscosity of the resin is not sufficiently high. When the viscosity of the resin is high, it is difficult for the raw materials remaining in the reactor to flow out of the system. For example, the unreacted materials remaining in the polyester resin such as ethylene glycol and cyclohexanedimethanol may be removed effectively by leaving the reaction products obtained by the esterification or transesterification reaction before the polycondensation reaction for about 0.2 to 3 hours under a reduced pressure of about 400 to 1 mmHg or about 200 to 3 mmHg. Herein, a temperature of the product may be controlled to be equal to that of the esterification or transesterification reaction or that of the polycondensation reaction, or a temperature there between.

As described above, adding a process of discharging unreacted raw materials out of the system may reduce the content of unreacted materials such as cyclohexanedimethanol remaining in the polyester resin, and as a result, a polyester resin capable of realizing desired physical properties at a higher level can be prepared.

Meanwhile, it is suitable that an intrinsic viscosity of the polymer obtained after the polycondensation reaction is 0.30 to 1.0 dl/g. When the intrinsic viscosity is less than 0.30 dl/g, a reaction rate of the solid-phase reaction may be significantly lowered. When the intrinsic viscosity exceeds 1.0 dl/g, a viscosity of a molten material may be increased during the melt polymerization, and thus a possibility of polymer discoloration may be increased by shear stress between a stirrer and the reactor, resulting in by-products such as acetaldehyde.

The polyester resin according to the embodiment may have a higher degree of polymerization by further performing a solid-phase reaction after the polycondensation reaction, if necessary.

Specifically, the polymer obtained by the polycondensation reaction is discharged out of the reactor to perform granulation. The granulation may be performed by a strand cutting method in which the polymer is extruded into a strand shape, solidified in a cooling liquid, and cut with a cutter, or an underwater cutting method in which a die hole is immersed in a cooling liquid, the polymer is directly extruded into the cooling liquid and cut with a cutter. In general, a temperature of the cooling liquid should be kept low in the strand cutting method to solidify the strand well, so that there is no problem in cutting. In the underwater cutting method, it is preferable to maintain the temperature of the cooling liquid in accordance with the polymer to make the shape of the polymer uniform. However, in the case of a crystalline polymer, the temperature of the cooling liquid may be intentionally kept high in order to induce crystallization during the discharge.

It is possible to remove raw materials soluble in water among unreacted raw materials such as cyclohexanedimethanol by water-washing the granulated polymer. The smaller the particle size, the wider the surface area relative to a weight of particles. Accordingly, it is advantageous that a particle size is small. In order to achieve this purpose, the particles may be made to have an average weight of about 15 mg or less. For example, the granulated polymer may be water-washed by leaving it in water at a temperature equal to the glass transition temperature of the polymer or lower than that by about 5 to 20 °C for 5 minutes to 10 hours.

The granulated polymer is subjected to a crystallization step to prevent fusion during the solid-phase reaction. The crystallization step may be performed under an atmosphere, inert gas, water vapor, or water vapor-containing inert gas or in solution, and may be performed at 110 to 210°C or 120 to 210°C. When the temperature is low, a rate at which crystals of the particles are formed may be excessively slow. When the temperature is high, a rate at which a surface of the particles is melted may be faster than a rate at which the crystals are formed, so that the particles may adhere to each other to cause fusion. Since the heat resistance of the particles is increased as the particles are crystallized, it is also possible to crystallize the particles by dividing the crystallization into several steps and raising the temperature stepwise.

The solid-phase reaction may be performed under an inert gas atmosphere such as nitrogen, carbon dioxide, argon, and the like or under a reduced pressure of 400 to 0.01 mmHg and at a temperature of 180 to 220°C for an average residence time of 1 to 150 hours. By performing the solid-phase reaction, the molecular weight may be additionally increased, and the raw materials that do not react in the melting reaction but just remain, and a cyclic oligomer, acetaldehyde, and the like that are generated during the reaction may be removed.

The solid-phase reaction may be performed until the intrinsic viscosity of the crystallized polymer reaches 0.65 dl/g or more, 0.70 dl/g or more, 0.75 dl/g or more, or 0.80 dl/g or more, wherein the intrinsic viscosity is measured at 35 °C after dissolving the polymer at a concentration of 1.2 g/dl in orthochlorophenol at 150 °C for 15 minutes.

Meanwhile, the polyester resin blend may provide a polyester film which is transparent and has excellent heat shrinkage properties without special additives, even if it contains up to about 50 wt% of recycled polyethylene terephthalate as the polyethylene terephthalate. Accordingly, the mixing ratio of the polyethylene terephthalate and the polyester resin in the polyester resin blend is not particularly limited.

For example, the polyester resin blend may include the polyethylene terephthalate and the polyester resin in a weight ratio of 1:99 to 99:1, 1:99 to 80:20, 1:99 to 70:30, 1:99 to 60:40, 1:99 to 50:50, or 5:95 to 50:50.

For example, when the polyester resin blend includes the polyethylene terephthalate and the polyester resin in a weight ratio of 1:99 to 50:50, or 5:95 to 50:50, a polyester film having excellent shrinkage properties may be provided.

The polyester resin blend includes 0.5 to 32 mol% of the diol moiety derived from the total cyclohexanedimethanol contained in the polyethylene terephthalate and polyester resin with respect to the total diol moiety contained in the polyethylene terephthalate and polyester resin, so that a polyester film having excellent transparency and shrinkage properties may be provided, and the polyester film may exhibit excellent chemical resistance when printed.

Even if the polyester resin blend according to the embodiment includes recycled polyethylene terephthalate, miscibility of the polyester resin with the recycled polyethylene terephthalate is excellent, and thus there is an advantage that no additive is required to supplement properties of the recycled polyethylene terephthalate. However, as a non-limiting example, the polyester resin blend may include an additive commonly applied in the art.

According to another embodiment of the present disclosure, there are provided a polyester film prepared from the polyester resin blend and a preparation method of the same.

The polyester film may exhibit excellent shrinkage properties while being transparent, as it is formed from the polyester resin blend according to the embodiment.

For example, the polyester film may have a haze of 5% or less, 4 % or less, 3 % or less, 2.5 % or less, 2 % or less, or 1 % or less when measured for a 50 $\mu$m thick specimen according to ASTM D1003-97, indicating high transparency. As the haze is most preferably 0% in theory, the lower limit may be 0% or more.

In addition, since the polyester film has a low initial shrinkage temperature of 65 °C or less, the polyester film may be molded in excellent quality without deformation or cloudiness of the PET container, when used as a heat shrinkable label of a PET container. In addition, the polyester film can provide a heat shrinkable film with excellent quality by exhibiting a maximum shrinkage of 55% or more, 60% or more, 65% or more, 70% or more, or 75% or more at 95 °C. The upper limit of the maximum shrinkage is not particularly limited, and may be, for example, 85% or less.

The polyester film may be a single-layer film or a multi-layer film including two or more layers.

When the polyester film is a single-layer film, it may be suitable for the film to be prepared from the polyester resin blend including the polyethylene terephthalate and the polyester resin in a weight ratio of 1:99 to 50:50 or 5:95 to 50:50 to exhibit excellent shrinkage properties.

When the polyester film is a multi-layer film, it may include a core layer (base layer) and a skin layer (resin layer).

The skin layer is formed on one side or both sides of the core layer, and at least one side of the polyester film may be a skin layer. In this structure, controlling the type and blending ratio of polyethylene terephthalate and a polyester resin in the core layer to exhibit excellent shrinkage properties, and controlling the type and blending ratio of polyethylene terephthalate and a polyester resin in the skin layer to exhibit crystallinity may provide a heat shrinkable film which has excellent shrinkage properties and can be recycled with a PET container, because fusion does not occur even when it is supplied to a recycle stream with the PET container.

For example, when the core layer includes polyethylene terephthalate and a polyester resin in a weight ratio of 0:100 to 50:50 and the skin layer includes polyethylene terephthalate and a polyester resin in a weight ratio of 10:90 to 100:0, the polyester film may exhibit excellent shrinkage properties and crystallinity at the same time.

Meanwhile, the polyester film may include two or more core layers and two or more skin layers. For example, the polyester film may have a structure in which first skin layer is formed on the first core layer, second core layer is formed on the first skin layer, and second skin layer is formed on the second core layer.

Regardless of whether the polyester film is a single-layer film or a multi-layer film, the weight ratio of the polyethylene terephthalate and the polyester resin included in the entire polyester film is adjusted to 5:95 to 50:50 to simultaneously exhibit excellent shrinkage properties and crystallinity.

Hereinafter, a preparation method of the polyester film will be described in detail.

The preparation method of the polyester film includes the steps of preparing an unstretched film by molding the polyester resin blend; and stretching the unstretched film.

The polyester resin blend may be provided by preparing polyethylene terephthalate and a polyester resin in the form of chips or pellets, drying them and then mixing them with a stirrer. Specifically, the polyethylene terephthalate and the polyester resin may be molded into chips or pellets by a twin-screw extruder. Then, the polyethylene terephthalate in the form of chips or pellets may be dried at about 120 to 160 °C, and the polyester resin in the form of chips or pellets may be dried at about 50 to 75 °C, followed by blending of the above components with a stirrer to prepare a polyester resin blend. Alternatively, the polyethylene terephthalate in the form of chips or pellets and the polyester resin in the form of chips or pellets may be dried together at about 50 to 160 °C, and then the above components may be blended with a stirrer to prepare a polyester resin blend.

Thereafter, the prepared polyester resin blend may be molded to prepare an unstretched film. The polyester resin blend may be molded at a temperature of about 230 °C to 310 °C, about 240 °C to 300 °C, or about 250 °C to 290 °C to maintain the long-chain structure of the polymer by minimizing thermal decomposition of the polymer, thereby minimizing a problem of damage or breakage of the film in the subsequent stretching process.

Specifically, a blend of the polyethylene terephthalate and the polyester resin in the form of chips or pellets may be supplied to an extruder, and the temperature of the cylinder may be adjusted to the above-described range to obtain an unstretched film.

When the polyester film has a multi-layer structure, two or more layers can be molded sequentially or simultaneously. That is, each layer may be sequentially formed by forming one layer and then forming another layer on the layer, or two or more layers may be formed at once by co-extrusion, or the like.

The unstretched film obtained by the above method may be cooled to an appropriate temperature. Although not particularly limited, the prepared unstretched film may be supplied to the subsequent process after being tightly wound on a cooling roll of about 10 to 70 °C.

In the step of stretching the unstretched film, the unstretched film may be stretched in a longitudinal direction and/or in a transverse direction to provide a uniaxially stretched film or a biaxially stretched film.

A stretching temperature of the unstretched film may be a temperature above the glass transition temperature of the polyester resin. Specifically, the unstretched film may be stretched at a temperature of 55 °C to 180 °C or 60 °C to 170 °C.

The unstretched film may be stretched at a high magnification. For example, the unstretched film may be uniaxially stretched with a transverse stretching ratio of 1.5 to 6 times or a longitudinal stretching ratio of 1.1 to 5 times. In addition, as another example, the unstretched film may be biaxially stretched with a transverse stretching ratio of 1.5 to 6 times and a longitudinal stretching ratio of 1.1 to 5 times.

The polyester film may have a crystallization half-time of 0.1 to 100 minutes, 0.1 to 80 minutes, 0.1 to 70 minutes, 0.1 to 60 minutes, 0.1 to 50 minutes, 0.1 to 40 minutes, 0.1 to 30 minutes, 0.1 to 20 minutes, 0.1 to 10 minutes, 0.1 to 7 minutes, 0.1 to 6 minutes, 0.1 to 5 minutes, 0.1 to 4 minutes, 0.1 to 3 minutes, 0.1 to 2 minutes, 0.1 to 1 minute, or 0.5 to 1 minute, so as not to cause a fusion problem even when supplied to a recycle stream together with a PET container.

The thickness of the polyester film is not particularly limited, but may be 3 $\mu$m to 350 $\mu$m. When the polyester

film is a multi-layer film, a percentage of the thickness of the skin layer to the thickness of the core layer (thickness of the skin layer/ thickness of the core layer X 100) may be 2.5% to 50%, and a percentage of the thickness of the skin layer to the thickness of the polyester film (thickness of the skin layer/ thickness of the polyester film X 100) may be 1% to 50%.

The polyester film may be applied to various technical fields to which the present invention pertains, but is expected to be usefully used as a heat shrinkable label for PET containers due to its excellent shrinkage properties and transparency.

Hereinafter, action and effects of the present disclosure are described by specific Examples in more detail. Meanwhile, these Examples are provided by way of example, and therefore, should not be construed as limiting the scope of the present invention.

The following physical properties were measured according to the following methods.

(1) Intrinsic viscosity (IV)

After dissolving a sample in o-chlorophenol at 150°C for 15 minutes at a concentration of 1.2 g/dl, the intrinsic viscosity of the sample was measured using an Ubbelohde viscometer. Specifically, a temperature of the viscometer was maintained at 35 °C, and the time taken (efflux time; to) for a solvent to pass between certain internal sections of the viscometer and the time taken (t) for a solution to pass the viscometer were measured. Subsequently, a specific viscosity was calculated by substituting $t_0$ and t into Formula 1, and the intrinsic viscosity was calculated by substituting the calculated specific viscosity into Formula 2.

[Formula 1]

$$\eta_{sp} = \frac{t - t_0}{t_0}$$

[Formula 2]

$$[\eta] = \frac{\sqrt{1 + 4A\eta_{sp}} - 1}{2Ac}$$

In Formula 2, A was a Huggins constant of 0.247, and c was a concentration of 1.2 g/dl.

(2) Glass transition temperature (Tg)

The Tg of the polyester resin was measured by differential scanning calorimetry (DSC). DSC 1 model manufactured by Mettler Toledo was used as a measuring device. Specifically, the polyester resin was dried for 5 to 10 hours under a nitrogen atmosphere at 60 °C using a dehumidifying dryer (D2T manufactured by Moretto). Therefore, the Tg was measured in a state in which a moisture content remaining in the sample was less than 500 ppm. About 6 to 10 mg of the dried sample was taken, filled in an aluminum pan, and heated at a rate of 10 °C/min from room temperature to 280 °C (1st scan), followed by annealing at 280 °C for 3 minutes. Thereafter, the sample was rapidly cooled to room temperature, and then heated at a rate of 10 °C/min from room temperature to 280 °C (2nd scan) to obtain a DSC curve. Then, the Tg value was analyzed in the second scan by DSC using a glass transition function in DSC menu of the related program (STARe software) provided by Mettler Toledo. Herein, the Tg is defined as the temperature at which a maximum slope of the curve appears when the DSC curve obtained in the second scan changes stepwise for the first time during the heating process. The temperature range of the scan was set from -20 °C to 15 °C to 15 °C to 20 °C of the midpoint calculated by the program.

(3) Oligomer content

After 0.3 g of the polyester resin prepared in Preparation Example was placed in 15 mL of o-chlorophenol and dissolved at 150 °C for 15 minutes, it was cooled to room temperature, and 9 mL of chloroform was added thereto. Then, gel permeation chromatography was performed using Tosoh's column and RI detector. Using the molecular weight graph of the polyester resin thus obtained, a ratio of the molecular weight area from 500 to 1000 g/mol to the entire molecular weight area was calculated and defined as the oligomer content of the polyester resin.

(4) Maximum shrinkage

The polyester film prepared in one of Examples and Comparative Examples was cut into a 5 cm × 5 cm square shape, immersed in hot water at 95 °C for 10 seconds, and then taken out. Thereafter, a ratio of the reduced length to the initial length represented by the following Formula 3 was calculated and defined as the maximum shrinkage at 95 °C.

[Formula 3]

$$\text{Maximum shrinkage (\%)} = (\text{initial length} - \text{length measured after immersion})/$$

$$\text{initial length} \times 100$$

(5) Initial shrinkage temperature

The polyester film prepared in one of Examples and Comparative Examples was cut into a 5 cm × 5 cm square shape, immersed in hot water at each temperature from 55 °C to 100 °C for 10 seconds, and then taken out. Then, the ratio of the reduced length to the initial length represented by the Formula 3 was calculated, and the temperature at which the polyester film shrank to 2% or less was defined as the initial shrinkage temperature.

(6) Haze

The polyester film prepared in one of Examples and Comparative Examples was cut to a size of 10 cm X 10 cm (longitudinal length X transverse length) to prepare a specimen. Thereafter, parallel transmittance and diffuse transmittance of the specimen were measured in accordance with ASTM D1003-97 using CM-3600A manufactured by Minolta. The transmittance is defined as a sum of the parallel transmittance and the diffuse transmittance, and the haze is defined as a percentage of the diffuse transmittance to the transmittance (haze = diffuse transmittance/ transmittance X 100). Therefore, the transmittance and haze were determined from the parallel transmittance and the diffuse transmittance of the specimen.

(7) Occurrence of fusion between polyester film and PET container

The polyester film and the polyethylene terephthalate container (PET container) were simultaneously pulverized to have a bulk density of about 250 to 600 g/L, and flakes were obtained. The obtained polyester film pieces and PET container flakes were left at 160 °C for 1 hour to visually observe whether or not the polyester film pieces and PET container flakes were fused. When some fused parts were observed, it was indicated as 'O', and when not observed, it was indicated as 'X'.

(8) Crystallization half-time

The crystallization half-time of the polyester film was measured by differential scanning calorimetry (DSC). Specifically, after the polyester film was rapidly heated to 140 °C, the temperature was maintained at 140 °C, and the time (unit: minute) consumed to generate half of the total heat generated during crystallization was measured.

Preparation Example 1: Preparation of polyester resin

Terephthalic acid, ethylene glycol, diethylene glycol, 1,4-cyclohexanedimethanol, 4-(hydroxymethyl)cyclohexylmethyl 4-(hydroxymethyl)cyclohexanecarboxylate (hereinafter, diol A), and 4-(4-(hydroxymethyl)cyclohexylmethoxymethyl)cyclohexylmethanol (hereinafter, diol B) were placed in a 3 kg batch reactor to which a column, and a condenser capable of being cooled by water were connected. The monomers were added in an appropriate amount such that the acid moiety derived from terephthalic acid is 100 mol% with respect to the total acid moiety included in the prepared polyester resin, the diol moiety derived from 1,4-cyclohexanedimethanol is 7 mol%, the diol moiety derived from diethylene glycol is 12 mol%, the diol moiety derived from diol A is 13 mol%, the diol moiety derived from diol B is 2 mol%, and the diol moiety derived from ethylene glycol is 66 mol% with respect to the total diol moiety. Then, 0.3 g of tetrabutyl titanate as a catalyst, 0.4 g of phosphoric acid as a stabilizer, and 2.1 g of cobalt acetate as a coloring agent were used. Then, nitrogen was injected into the reactor to form a pressurized state in which the pressure of the reactor was higher than normal pressure by 1.0 kgf/cm$^2$ (absolute pressure: 1495.6 mmHg).

Then, the temperature of the reactor was raised to 220 °C over 90 minutes, maintained at 220 °C for 2 hours, and then raised to 260 °C over 2 hours. Thereafter, an esterification reaction proceeded until the mixture in the reactor became transparent with the naked eye while maintaining the temperature of the reactor at 260 °C. When the esterification reaction was completed, the nitrogen in the pressurized reactor was discharged to the outside to lower the pressure of the reactor to normal pressure, and then the mixture in the reactor was transferred to a 3 kg reactor capable of vacuum reaction.

Then, the pressure of the reactor was reduced from normal pressure to 5 Torr (absolute pressure: 5 mmHg) over 30 minutes, and the temperature of the reactor was raised to 270 °C over 1 hour to proceed a polycondensation reaction while maintaining the pressure of the reactor at 1 Torr (absolute pressure: 1 mmHg) or less. In the initial stage of the polycondensation reaction, a stirring rate was set high, but when the stirring force is weakened due to an increase in the viscosity of the reactant as the polycondensation reaction progresses or the temperature of the reactant rises above the set temperature, the stirring rate may be appropriately adjusted. The polycondensation reaction was performed until an intrinsic viscosity (IV) of the mixture (melt) in the reactor became 0.77 dl/g. When the intrinsic viscosity of the mixture in the reactor reached a desired level, the mixture was discharged out of the reactor and stranded. This was solidified with a cooling liquid and granulated to have an average weight of about 12 to 14 mg.

Preparation Examples 2 to 8 and Comparative Preparation Examples 1 to 4: Preparation of polyester resin

A polyester resin was prepared in the same manner as in Preparation Example 1, except that the contents of the diol moiety derived from 1,4-cyclohexanedimethanol, the diol moiety derived from diethylene glycol, the diol moiety derived from diol A, and the diol moiety derived from diol B with respect to the total diol moiety in the polyester resin were changed as shown in Table 1.

[Table 1]

|  | CHDM | DEG | diol A | diol B | IV | Tg (°C) | Oligomer (area%) |
|---|---|---|---|---|---|---|---|
| Prep. Ex. 1 | 7 | 12 | 13 | 2.0 | 0.77 | 68 | 0.6 |
| Prep. Ex. 2 | 14 | 13 | 0.1 | 0.1 | 0.75 | 70 | 1.0 |
| Prep. Ex. 3 | 7 | 10 | 1.0 | 15 | 0.78 | 67 | 0.7 |
| Prep. Ex. 4 | 2 | 12 | 15 | 15 | 0.77 | 63 | 0.7 |
| Prep. Ex. 5 | 10 | 12 | 10 | 1.5 | 0.75 | 68 | 0.5 |
| Prep. Ex. 6 | 10 | 12 | 5 | 2.0 | 0.71 | 69 | 0.8 |
| Prep. Ex. 7 | 29 | 12 | 0.1 | 0.1 | 0.78 | 73 | 1.1 |
| Prep. Ex. 8 | 29 | 11 | 0.5 | 0.2 | 0.73 | 74 | 0.8 |
| Comp. Prep. Ex. 1 | 15 | 10 | 0 | 0 | 0.74 | 73 | 1.7 |
| Comp. Prep. Ex. 2 | 20 | 11 | 0 | 0 | 0.75 | 71 | 1.7 |
| Comp. Prep. Ex. 3 | 40 | 10 | 0 | 0 | 0.79 | 74 | 1.5 |
| Comp. Prep. Ex. 4 | 7 | 13 | 35 | 10 | 0.67 | 60 | 1.5 |

In Table 1 above, CHDM is in mol% of a diol moiety derived from 1,4-cyclohexanedimethanol with respect to the total diol moiety, DEG is in mol% of a diol moiety derived from diethylene glycol with respect to the total diol moiety, diol A is in mol% of a diol moiety derived from diol A with respect to the total diol moiety, diol B is in mol% of a diol moiety derived from diol B with respect to the total diol moiety, and the remaining diol moiety is a diol moiety derived from ethylene glycol.

Example 1: Preparation of polyester resin blend and polyester film

1) Preparation of polyester resin blend

The polyester resin prepared in Preparation Example 1 was blended with recycled PET in a weight ratio of 95:5 to prepare a polyester resin blend.
Specifically, recycled PET, which was re-pelletized by melt-extruding flakes obtained by pulverizing and washing waste plastics, was dry-mixed at room temperature with the above polyester resin pelletized separately, and dried at a temperature of 50 °C to 150 °C to prepare a polyester resin blend.
The composition of the recycled PET may vary depending on where the waste plastics are collected, how to sort the waste plastics, and how to re-pelletize it. The recycled PET used in this experiment is a copolymer of terephthalic acid, isophthalic acid and ethylene glycol, which contains isophthalic acid within 3 mol% with respect to the total dicarboxylic acid, and has an intrinsic viscosity (IV) of 0.74 dl/g, a crystallization temperature of 130 °C, and a melting temperature of 250 °C.
The polyester resin blend prepared by blending the polyester resin with recycled PET in a weight ratio of 95:5 was used as a polyester resin blend for forming a core layer. In the same manner as described above, the polyester resin prepared in Preparation Example 1 was blended with recycled PET in a weight ratio of 90:10 to prepare a polyester resin blend for forming a skin layer.

2) Preparation of polyester film

The polyester resin blend for forming a core layer and the polyester resin blend for forming a skin layer were coextruded through a die at a temperature of 260 °C to 290 °C, and then cooled to 20 °C to 50 °C to form an unstretched film having a threelayer structure in which first and second skin layers are formed on both sides of the core layer. Thereafter, the unstretched film was stretched 5 times in the transverse direction while reheating to 75 °C to 90 °C to prepare a polyester film.
In the prepared polyester film, the thickness of the core layer was 40 μm, and the thickness of each skin layer was 5 μm.

Examples 2 to 13 and Comparative Examples 1 to 7: Preparation of polyester resin blend and polyester film

A polyester resin blend and a polyester film were prepared in the same manner as in Example 1, except that the type of the polyester resin and the contents of the recycled PET in the polyester resin blend for forming the core layer and the polyester resin blend for forming the skin layer were changed as described in Table 2.

[Table 2]

|  | Type of polyester resin | Recycled PET (wt%) | | | |
|---|---|---|---|---|---|
|  |  | 1st skin layer | Core layer | 2nd skin layer | Polyester film |
| Ex. 1 | Prep. Ex. 1 | 10 | 5 | 10 | 6 |
| Ex. 2 | Prep. Ex. 1 | 30 | 5 | 30 | 10 |
| Ex. 3 | Prep. Ex. 1 | 50 | 5 | 50 | 14 |
| Ex. 4 | Prep. Ex. 1 | 50 | 20 | 50 | 26 |
| Ex. 5 | Prep. Ex. 1 | 70 | 10 | 70 | 22 |
| Ex. 6 | Prep. Ex. 1 | 100 | 35 | 100 | 48 |
| Ex. 7 | Prep. Ex. 2 | 30 | 5 | 30 | 10 |
| Ex. 8 | Prep. Ex. 3 | 10 | 20 | 10 | 18 |
| Ex. 9 | Prep. Ex. 4 | 50 | 1 | 50 | 10.8 |
| Ex. 10 | Prep. Ex. 5 | 30 | 10 | 30 | 14 |
| Ex. 11 | Prep. Ex. 6 | 90 | 10 | 90 | 26 |
| Ex. 12 | Prep. Ex. 7 | 50 | 15 | 50 | 22 |
| Ex. 13 | Prep. Ex. 8 | 50 | 20 | 50 | 26 |

(continued)

| | Type of polyester resin | Recycled PET (wt%) | | | |
|---|---|---|---|---|---|
| | | 1st skin layer | Core layer | 2nd skin layer | Polyester film |
| Comp. Ex. 1 | Comp. Prep. Ex. 1 | 10 | 20 | 10 | 18 |
| Comp. Ex. 2 | Comp. Prep. Ex. 1 | 50 | 20 | 50 | 26 |
| Comp. Ex. 3 | Comp. Prep. Ex. 2 | 10 | 20 | 10 | 18 |
| Comp. Ex. 4 | Comp. Prep. Ex. 2 | 50 | 20 | 50 | 26 |
| Comp. Ex. 5 | Comp. Prep. Ex. 3 | 0 | 30 | 0 | 24 |
| Comp. Ex. 6 | Comp. Prep. Ex. 4 | 50 | 1 | 50 | 10.8 |
| Comp. Ex. 7 | - | 100 | 100 | 100 | 100 |

Experimental Example: Evaluation of physical properties of polyester film

The polyester films prepared in Examples and Comparative Examples were evaluated according to the method described above, and the results are shown in Table 3.

[Table 3]

| | Maximum shrinkage (%) | Initial shrinkage temperature (°C) | Haze (%) | Occurrence of fusion [a] | Crystallization half-time (min) |
|---|---|---|---|---|---|
| Ex. 1 | 78 | 62 | 0.8 | X | 5.2 |
| Ex. 2 | 77 | 61 | 0.7 | X | 3.5 |
| Ex. 3 | 76 | 63 | 0.9 | X | 1.7 |
| Ex. 4 | 75 | 62 | 1.2 | X | 1.5 |
| Ex. 5 | 76 | 62 | 1.8 | X | 1.1 |
| Ex. 6 | 56 | 64 | 2.1 | X | 0.5 |
| Ex. 7 | 63 | 64 | 1.3 | X | 3.8 |
| Ex. 8 | 72 | 62 | 0.9 | X | 4.8 |
| Ex. 9 | 77 | 57 | 0.9 | X | 1.6 |
| Ex. 10 | 76 | 61 | 0.8 | X | 4.2 |
| Ex. 11 | 64 | 62 | 1.1 | X | 0.8 |
| Ex. 12 | 73 | 65 | 1.1 | X | 1.7 |
| Ex. 13 | 74 | 65 | 1.2 | X | 1.7 |
| Comp. Ex. 1 | 53 | 68 | 1.8 | O | > 100 |
| Comp. Ex. 2 | 47 | 69 | 2.1 | X | 2.8 |
| Comp. Ex. 3 | 59 | 66 | 1.0 | O | > 100 |
| Comp. Ex. 4 | 54 | 67 | 1.8 | X | 3.6 |
| Comp. Ex. 5 | 58 | 68 | 4.6 | O | > 100 |
| Comp. Ex. 6 | | | | | |

(continued)

|  | Maximum shrinkage (%) | Initial shrinkage temperature (°C) | Haze (%) | Occurrence of fusion a) | Crystallization half-time (min) |
|---|---|---|---|---|---|
| Comp. Ex. 7 | 18 | 72 | 3.1 | X | 0.5 |
| a) Occurrence of fusion between polyester film and PET container | | | | | |

Referring to Table 3, in Examples 1 to 13, blending a polyester resin including 0.2 to 30 mol% of a diol moiety derived from diol A and diol B with respect to the total diol moiety with recycled PET effectively slowed the crystallization rate of the recycled PET to provide a polyester film with high transparency. It was confirmed that the polyester film was not fused with PET container flakes at a high temperature of 160 °C due to the elevated crystallization temperature. In particular, the polyester film according to Examples 1 to 13 is expected to be useful as a heat shrinkable film, because the initial shrinkage temperature was very low compared to a film made of recycled PET and the maximum shrinkage was remarkably improved.

On the other hand, as the polyester films of Comparative Examples 1 to 5 were prepared by blending a polyester resin including no diol moiety derived from diol A and diol B with recycled PET, they did not exhibit sufficiently low initial shrinkage temperature and sufficient shrinkage. In addition, as the polyester resin including no diol moiety derived from diol A and diol B exhibited amorphousness, when the blending ratio of the recycled PET was lowered, the polyester film also exhibited amorphousness and was fused with PET container flakes, thereby cannot be continuously reused.

## Claims

1. A polyester resin blend comprising polyethylene terephthalate; and

   a polyester resin having a structure in which an acid moiety derived from a dicarboxylic acid or a derivative thereof and a diol moiety derived from a diol containing ethylene glycol and a comonomer are repeated by polymerizing a dicarboxylic acid or a derivative thereof and a diol containing ethylene glycol and a comonomer; wherein the comonomer contains cyclohexanedimethanol, 4-(hydroxymethyl)cyclohexylmethyl 4-(hydroxymethyl)cyclohexanecarboxylate and 4-(4-(hydroxymethyl)cyclohexylmethoxymethyl)cyclohexylmethanol, and the polyester resin comprises 0.2 to 30 mol% of a diol moiety derived from 4-(hydroxymethyl)cyclohexylmethyl 4-(hydroxymethyl)cyclohexanecarboxylate and 4-(4-(hydroxymethyl)cyclohexylmethoxymethyl)cyclohexylmethanol with respect to the total diol moiety.

2. The polyester resin blend of Claim 1,
   wherein the polyethylene terephthalate is virgin polyethylene terephthalate, recycled polyethylene terephthalate, or a mixture thereof.

3. The polyester resin blend of Claim 1,
   wherein the polyester resin comprises 0.1 to 15 mol% of a diol moiety derived from 4-(hydroxymethyl)cyclohexylmethyl 4-(hydroxymethyl)cyclohexanecarboxylate with respect to the total diol moiety.

4. The polyester resin blend of Claim 1,
   wherein the polyester resin comprises 0.1 to 15 mol% of a diol moiety derived from 4-(4-(hydroxymethyl)cyclohexylmethoxymethyl)cyclohexylmethanol with respect to the total diol moiety.

5. The polyester resin blend of Claim 1,
   wherein the polyester resin comprises 1 to 35 mol% of a diol moiety derived from cyclohexanedimethanol with respect to the total diol moiety.

6. The polyester resin blend of Claim 1,
   wherein the polyester resin comprises 2 to 15 mol% of a diol moiety derived from diethylene glycol with respect to the total diol moiety.

7. The polyester resin blend of Claim 1,

wherein the comonomer further contains 1,2-propanediol, 1,3-propanediol, 2-methyl-1,3-propanediol, 2-methylene-1,3-propanediol, 2-ethyl-1,3-propanediol, 2-isopropyl-1,3-propanediol, 2,2-dimethyl-1,3-propanediol, 1,4-butanediol, 2,3-butanediol, 3-methyl-1,5-pentanediol, 3-methyl-2,4-pentanediol, 1,6-hexanediol, 1,2-cyclohexanediol, 1,4-cyclohexanediol, diethylene glycol or a mixture thereof.

8. The polyester resin blend of Claim 1,

wherein the polyester resin comprises an acid moiety derived from terephthalic acid or a derivative thereof, or an acid moiety derived from terephthalic acid or a derivative thereof and an acid moiety derived from a comonomer of dicarboxylic acid or a derivative thereof, and

the comonomer of dicarboxylic acid or a derivative thereof is at least one selected from the group consisting of isophthalic acid, dimethyl isophthalate, phthalic acid, dimethyl phthalate, phthalic anhydride, 2,6-naphthalene dicarboxylic acid, dimethyl 2,6-naphthalene dicarboxylate, diphenyl dicarboxylic acid, 1,4-cyclohexane dicarboxylic acid, 1,3-cyclohexane dicarboxylic acid, dimethyl 1,4-cyclohexane dicarboxylate, dimethyl 1,3-cyclohexane dicarboxylate, sebacic acid, succinic acid, isodecyl succinic acid, maleic acid, maleic anhydride, fumaric acid, adipic acid, glutaric acid and azelaic acid.

9. The polyester resin blend of Claim 1,
wherein a content of an oligomer having a molecular weight of 500 to 1000 g/mol introduced into the polyester resin is 3.0 area% or less with respect to the total area of the polyester resin.

10. A polyester film formed from the polyester resin blend of Claim 1.

11. The polyester film of Claim 10,
wherein the polyester film has a haze of 5% or less, when measured for a 50 $\mu$m thick specimen according to ASTM D1003-97.

12. The polyester film of Claim 10,
wherein the polyester film has an initial shrinkage temperature of 65 °C or less.

13. The polyester film of Claim 10,
wherein the polyester film has a maximum shrinkage of 55% to 85% at 95 °C.

14. The polyester film of Claim 10,
wherein the polyester film is a single-layer film.

15. The polyester film of Claim 10,
wherein the polyester film is a multi-layer film including a core layer and a skin layer.

16. The polyester film of Claim 15,
wherein the core layer comprises polyethylene terephthalate and a polyester resin in a weight ratio of 0:100 to 50:50, and the skin layer comprises polyethylene terephthalate and a polyester resin in a weight ratio of 10:90 to 100:0.

17. The polyester film of Claim 10,
wherein the polyester film is uniaxially stretched with a transverse stretching ratio of 1.5 to 6 times or a longitudinal stretching ratio of 1.1 to 5 times.

18. The polyester film of Claim 10,
wherein the polyester film is biaxially stretched with a transverse stretching ratio of 1.5 to 6 times and a longitudinal stretching ratio of 1.1 to 5 times.

19. The polyester film of Claim 10,
wherein the polyester film has a crystallization half-time of 0.1 to 100 minutes.

20. The polyester film of Claim 15,
wherein the polyester film has a percentage of a thickness of the skin layer to a thickness of the core layer of 2.5% to 50%.

**21.** The polyester film of Claim 14 or Claim 15,
wherein a weight ratio of the polyethylene terephthalate and the polyester resin included in the entire polyester film is 5:95 to 50:50.

**22.** A preparation method of a polyester film, comprising the steps of:
preparing an unstretched film by molding the polyester resin blend of Claim 1; and stretching the unstretched film.

## INTERNATIONAL SEARCH REPORT

| International application No. |
|---|
| **PCT/KR2020/009616** |

### A. CLASSIFICATION OF SUBJECT MATTER

**C08L 67/02**(2006.01)i; **C08G 63/672**(2006.01)i; **C08G 63/60**(2006.01)i; **C08J 5/18**(2006.01)i; **B32B 27/36**(2006.01)i; **B29C 55/04**(2006.01)i; **B29C 55/12**(2006.01)i

According to International Patent Classification (IPC) or to both national classification and IPC

### B. FIELDS SEARCHED

Minimum documentation searched (classification system followed by classification symbols)

C08L 67/02; B29D 7/01; C08G 63/12; C08G 63/18; C08G 63/181; C08G 63/78; C08J 5/18; C08L 67/04; C08G 63/672; C08G 63/60; B32B 27/36; B29C 55/04; B29C 55/12

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 폴리에틸렌테레프탈레이트(polyethylene terephthalate), 디카르복실산 (dicarboxylic acid), 디올(diol), 에틸렌글리콜(ethylene glycol), 폴리에스테르(polyester), 필름(film)

### C. DOCUMENTS CONSIDERED TO BE RELEVANT

| Category* | Citation of document, with indication, where appropriate, of the relevant passages | Relevant to claim No. |
|---|---|---|
| X<br><br>Y | KR 10-2014-0146544 A (SK CHEMICALS CO., LTD.) 26 December 2014. See claims 1, 4, 6, 11 and 12; and paragraphs [0003], [0043], [0053], [0073], [0093] and [0094]. | 1-14,17,19,21,22<br><br>15,16,18,20 |
| Y | KR 10-2001-0093294 A (E.I. DUPONT DE NEMOURS AND COMPANY) 27 October 2001. See claim 1; page 4, lines 17-21; and page 10, lines 1-8. | 15,16,18,20 |
| A | KR 10-2016-0024699 A (SK CHEMICALS CO., LTD.) 07 March 2016. See entire document. | 1-22 |
| A | KR 10-2014-0130937 A (SK CHEMICALS CO., LTD.) 12 November 2014. See entire document. | 1-22 |

☑ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **02 November 2020** | **03 November 2020** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**EP 4 036 168 A1**

**INTERNATIONAL SEARCH REPORT**

| International application No. |
|---|
| **PCT/KR2020/009616** |

**C. DOCUMENTS CONSIDERED TO BE RELEVANT**

| Category* | Citation of document, with indication, where appropriate, of the relevant passages | Relevant to claim No. |
|---|---|---|
| A | KR 10-2014-0146543 A (SK CHEMICALS CO., LTD.) 26 December 2014. See entire document. | 1-22 |
| A | KR 10-2016-0022090 A (SK CHEMICALS CO., LTD.) 29 February 2016. See entire document. | 1-22 |

Form PCT/ISA/210 (second sheet) (July 2019)

19

INTERNATIONAL SEARCH REPORT
Information on patent family members

International application No.

**PCT/KR2020/009616**

| Patent document cited in search report | | | Publication date (day/month/year) | Patent family member(s) | | | Publication date (day/month/year) |
|---|---|---|---|---|---|---|---|
| KR | 10-2014-0146544 | A | 26 December 2014 | BR | 112015030862 | A2 | 25 July 2017 |
| | | | | CN | 105283506 | A | 27 January 2016 |
| | | | | CN | 105283506 | B | 01 March 2017 |
| | | | | EP | 3012296 | A1 | 27 April 2016 |
| | | | | EP | 3012296 | B1 | 07 March 2018 |
| | | | | JP | 2016-521807 | A | 25 July 2016 |
| | | | | JP | 6466425 | B2 | 06 February 2019 |
| | | | | KR | 10-2162280 | B1 | 06 October 2020 |
| | | | | TW | 201502160 | A | 16 January 2015 |
| | | | | TW | I637009 | B | 01 October 2018 |
| | | | | US | 10723852 | B2 | 28 July 2020 |
| | | | | US | 2016-0122485 | A1 | 05 May 2016 |
| | | | | US | 2018-0223060 | A1 | 09 August 2018 |
| | | | | US | 2020-0255611 | A1 | 13 August 2020 |
| | | | | WO | 2014-204157 | A1 | 24 December 2014 |
| KR | 10-2001-0093294 | A | 27 October 2001 | CN | 1338989 | A | 06 March 2002 |
| | | | | CN | 1338989 | C | 06 March 2002 |
| | | | | DE | 60012712 | T2 | 28 July 2005 |
| | | | | EP | 1165317 | A1 | 02 January 2002 |
| | | | | EP | 1165317 | B1 | 04 August 2004 |
| | | | | JP | 2002-536209 | A | 29 October 2002 |
| | | | | JP | 4572037 | B2 | 27 October 2010 |
| | | | | KR | 10-0587443 | B1 | 08 June 2006 |
| | | | | WO | 00-46026 | A1 | 10 August 2000 |
| KR | 10-2016-0024699 | A | 07 March 2016 | CN | 106604966 | A | 26 April 2017 |
| | | | | CN | 106604966 | B | 13 November 2018 |
| | | | | EP | 3170866 | A1 | 24 May 2017 |
| | | | | EP | 3170866 | B1 | 27 February 2019 |
| | | | | ES | 2724369 | T3 | 10 September 2019 |
| | | | | JP | 2017-525822 | A | 07 September 2017 |
| | | | | JP | 6592507 | B2 | 16 October 2019 |
| | | | | US | 10550223 | B2 | 04 February 2020 |
| | | | | US | 2017-0275419 | A1 | 28 September 2017 |
| | | | | US | 2020-0109240 | A1 | 09 April 2020 |
| | | | | WO | 2016-032188 | A1 | 03 March 2016 |
| KR | 10-2014-0130937 | A | 12 November 2014 | CN | 105324409 | A | 10 February 2016 |
| | | | | CN | 105324409 | B | 08 August 2017 |
| | | | | EP | 2993196 | A1 | 09 March 2016 |
| | | | | HK | 1220712 | A1 | 12 May 2017 |
| | | | | JP | 2016-516878 | A | 09 June 2016 |
| | | | | JP | 6321784 | B2 | 09 May 2018 |
| | | | | KR | 10-2082304 | B1 | 27 February 2020 |
| | | | | TW | 201500445 | A | 01 January 2015 |
| | | | | TW | I626273 | B | 11 June 2018 |
| | | | | US | 10717811 | B2 | 21 July 2020 |
| | | | | US | 2016-0068629 | A1 | 10 March 2016 |
| | | | | WO | 2014-178631 | A1 | 06 November 2014 |
| KR | 10-2014-0146543 | A | 26 December 2014 | BR | 112015031350 | A2 | 25 July 2017 |
| | | | | CN | 105324419 | A | 10 February 2016 |
| | | | | CN | 105324419 | B | 12 June 2018 |

Form PCT/ISA/210 (patent family annex) (July 2019)

**INTERNATIONAL SEARCH REPORT**
Information on patent family members

International application No.

**PCT/KR2020/009616**

| Patent document cited in search report | | | Publication date (day/month/year) | Patent family member(s) | | | Publication date (day/month/year) |
|---|---|---|---|---|---|---|---|
| | | | | EP | 3012286 | A2 | 27 April 2016 |
| | | | | JP | 2016-521806 | A | 25 July 2016 |
| | | | | JP | 6367934 | B2 | 01 August 2018 |
| | | | | TW | 201504333 | A | 01 February 2015 |
| | | | | TW | I633150 | B | 21 August 2018 |
| | | | | US | 10696806 | B2 | 30 June 2020 |
| | | | | US | 2016-0130414 | A1 | 12 May 2016 |
| | | | | WO | 2014-204156 | A2 | 24 December 2014 |
| | | | | WO | 2014-204156 | A3 | 23 April 2015 |
| KR | 10-2016-0022090 | A | 29 February 2016 | BR | 112017002950 | A2 | 05 December 2017 |
| | | | | CN | 106661246 | A | 10 May 2017 |
| | | | | EP | 3184580 | A1 | 28 June 2017 |
| | | | | JP | 2017-526557 | A | 14 September 2017 |
| | | | | JP | 6681385 | B2 | 15 April 2020 |
| | | | | TW | 201609393 | A | 16 March 2016 |
| | | | | TW | I659840 | B | 21 May 2019 |
| | | | | US | 2017-0232721 | A1 | 17 August 2017 |
| | | | | WO | 2016-027994 | A1 | 25 February 2016 |

Form PCT/ISA/210 (patent family annex) (July 2019)